# EUROPEAN PATENT APPLICATION

(11) **EP 2 594 846 A1**
(43) Date of publication of application: **22.05.2013**
(21) Application number: 11806593.7
(22) Date of filing: 16.06.2011
(51) Int. Cl.: F21V 23/00, F21S 2/00, F21S 8/04, F21V 3/02, F21V 17/00, F21V 29/00, H05B 37/02, F21Y 101/02

(54) **LIGHTING DEVICE**

(30) Priority: 13.07.2010 JP 2010158946
(71) Applicant: Sharp Kabushiki Kaisha, Osaka-shi, Osaka 545-8522 (JP)
(72) Inventor: HIRAOKA, Jun, Osaka 545-8522 (JP); UEDA, Ken, Osaka 545-8522 (JP); SATOH, Tsutomu, Osaka 545-8522 (JP)
(74) Representative: Treeby, Philip David William
(86) International application number: PCT/JP2011/063775
(87) International publication number: WO 2012/008262

(57) **Abstract**

A lighting apparatus that can prevent the excessive adjustment of brightness even in the case that the light is incident from the outside is provided. An adapter 63 is hooked to a ceiling socket 62 located on the ceiling. Any one of first ring material 6 and second ring material 60 fixed to a chassis 1 is interlocked to the adapter 63, to install the lighting apparatus on the ceiling. A circuit board 5 is connected to a sensor board 53 on which an illuminance sensor 52 is mounted. The illuminance sensor 52 outputs electric signals corresponding to the detected illuminance. A control unit adjusts the brightness of light emitted from a LED module, on the basis of the illuminance detected by the illuminance sensor 52. The illuminance sensor 52 is fixed to the chassis 1 in such a manner that it is inclined from a rotation axis about which the chassis 1 is rotated.

## Description

### [Technical Field]

The present invention relates to a lighting apparatus that includes an illuminance sensor and is able to adjust the brightness.

### [Background Art]

As a lighting apparatus for a room in a house, the lighting apparatus includes a light source, such as an incandescent light bulb and a fluorescent lamp is conventionally used. According to the recent technique implementing to make a light emitting diode (LED) emit proper high brightness light, the LED having properties such as less power consumption and longer life is gradually becoming popular as the light source of such a lighting apparatus, instead of the incandescent light bulb and fluorescent lamp.

A lighting apparatus is known to provide with an ability detecting the brightness on lighted surface, in order to keep the constant brightness in the lightened environment, such as inside of the room. For example, one lighting apparatus is known to include an annulus fluorescent lamp, a rectangular main body, and a cover unit that covers the fluorescent lamp. This lighting apparatus further includes a brightness detecting means for detecting the brightness which is arranged on a rectangular portion of the main body but outside of the cover unit. Thus, this lighting apparatus is expected to exclude the light of the fluorescent lamp itself and to accurately measure the brightness of the lightened environment (see Patent Document 1).

### [Prior Technical Document]

### [Patent Document]

[Patent Document 1] Japanese Patent Application Laid-Open No. 2010-73610

### [Summary of the Invention]

### [Problems to be Solved by the Invention]

For example, when the light is incident from the outside through a room window, a room door, a room opening toward the outside or the like and a part of the room become higher brightness, the lighting apparatus in the Patent Document 1 is expected to detect the higher brightness and to reduce the brightness of light emitted from the light source in order to keep the constant illuminance in the lighted area. Although the lighting apparatus in the Patent Document 1 includes an illuminance sensor as the brightness detecting means, the illuminance sensor is fixed on the main body. Thus, the illuminance sensor cannot change the illuminance detection range on the lighted area, because the illuminance detection range is determined by the fixed position of the illuminance sensor on the main body. For example, in the case that the main body is located near the room window through which the light is incident from the outside, the illuminance sensor may detect a region within the lighted area where the illuminance is relatively higher due to the light incident from the outside, but may hardly detect a region within the lighted area where the illuminance is relatively lower due to the failure of light incident from the outside. As the result, the lighting apparatus in the Patent Document 1 may adjust and reduce the illuminance of light emitted from the light source too much, for the region where the light is hardly incident from the outside. Therefore, a problem is considered that the room happens to become dark.

The present invention is made in view of such circumstances, and has an object to provide a lighting apparatus that can prevent the excessive adjustment of brightness even in the case that the light is incident from the outside.

### [Means for Solving Problems]

A lighting apparatus according to an aspect of the present invention has a light source and an illuminance sensor that detects an illuminance on a lighted surface which is lighted by the light source, and comprises an illuminance detection range changing unit that changes an illuminance detection range of the illuminance sensor in the lighted area which is lighted by the light source on the lighted surface.

According to the aspect of the present invention, the illuminance detection range changing unit is provided that can change the illuminance detection range of the illuminance sensor within the lighted area which is lighted by the light source on the lighted surface. Thus, the illuminance detection range of illuminance sensor is not fixed, although the conventional illuminance detection range is fixed. Therefore, it is possible to change the illuminance detection range. For example, even when the light is incident from the outside through a window or the like and the room becomes brighter at some area (e.g., floor) near the window, the illuminance sensor can detect the illuminance at a dark area in the room and can adjust the brightness of light emitted by the light source. Therefore, it is possible to prevent excessive reduction of illuminance for the dark area where the light is hardly incident from the outside, and to prevent the excessive adjustment of illuminance.

A lighting apparatus according to another aspect of the present invention has the illuminance sensor that is fixed to a main body of the lighting apparatus which has the illuminance sensor, and the illuminance detection range changing unit that rotates the main body of the lighting apparatus to change the illuminance detection range.

According to another aspect of the present invention, the illuminance sensor is fixed to the main body of the lighting apparatus, and the illuminance detection range changing unit rotates the main body of the lighting apparatus to change the illuminance detection range. The rotation of main body of the lighting apparatus can lead to change the illuminance detection range of the illuminance sensor that is fixed to the main body of the lighting apparatus.

A lighting apparatus according to another aspect of the present invention has the illuminance detection range changing unit that moves the illuminance sensor relatively to the main body of the lighting apparatus, to change the illuminance detection range.

According to another aspect of the present invention, the movement of illuminance sensor can lead to change the illuminance detection range.

A lighting apparatus according to another aspect of the present invention has the illuminance sensor that is inclined from a rotation axis about which the main body of the lighting apparatus is rotated.

According to another aspect of the present invention, the illuminance sensor is inclined from the rotation axis about which the main body of the lighting apparatus is rotated. Thus, it is possible to detect e.g., the illuminance of floor surface in the back of the room (no window area) far from the window, door and opening to the outside, and further to inhibit detecting the illuminance of floor surface near the window. In other words, the illuminance sensor can detect the illuminance of dark area in the room and adjust the brightness of light emitted by the light source, even when the light is incident from the outside through the window or the like and the room becomes brighter at some area (e.g., floor) near the window. Therefore, it is possible to prevent excessive reduction of illuminance for the dark area where the light is hardly incident from the outside, and to prevent the excessive adjustment of illuminance.

A lighting apparatus according to another aspect of the present invention has a restrictor that restricts a light-acceptance angle of the illuminance sensor.

According to another aspect of the present invention, the restrictor is provided that restricts the light-acceptance angle of illuminance sensor. The detection range of illuminance sensor is in a conical shape whose cone point is the position of illuminance sensor, and the light-acceptance angle is represented by the half angle of the cone point. For example, the restriction of light-acceptance angle can lead to inhibit detecting the illuminance of area where the light is incident from the outside, and to detect the illuminance of area where the light is hardly incident from the outside. Therefore, it is possible to prevent the influence of lighted area in the room and to accurately detect the illuminance of dark area in the room, even when a part of the room becomes brighter by the incident light from the outside.

A lighting apparatus according to another aspect of the present invention has the restrictor that restricts the light-acceptance angle to be within ± 20 degree to a center.

According to another aspect of the present invention, the restrictor restricts the light-acceptance angle to be within ± 20 degree to the center of light-acceptance direction. For example, when the lighting apparatus is attached to the ceiling whose altitude is 2.4m, the illuminance sensor can obtain the detection range that can detect the illuminance of circle floor whose diameter is about 2m and whose center is offset about 1m in the light-acceptance direction away from a point directly under the lighting apparatus. Therefore, it is possible to detect the illuminance of almost the end of the room where the light is hardly inclined from the outside, for example, in the case that the lighting apparatus is located at the center of the room and the size of the room is about 6-15 Japanese tatami mats.

### [Effects of the Invention]

In an aspect of the present invention, the illuminance sensor can detect the illuminance of dark area in the room and adjust the brightness of light emitted by the light source, even when the light is inclined from the outside through the window or the like and the room becomes brighter at some area (e.g., floor) near the window. Therefore, it is possible to prevent excessive reduction of illuminance for the dark area where the light is hardly incident from the outside, and to prevent the excessive adjustment of illuminance.

### [Brief Description of the Drawings]

FIG. 1 is an outline view showing an example configuration of a lighting apparatus according to an embodiment.
FIG. 2 is an exploded perspective view showing an example of the lighting apparatus according to the embodiment.
FIG. 3 is a sectional view showing an example configuration of a main section included in the lighting apparatus according to the embodiment.
FIG. 4 is a plain view showing an example arrangement of the main section near the circuit board included in the lighting apparatus according to the embodiment.
FIG. 5 is a plain view showing an example configuration of a LED module according to the embodiment.
FIG. 6 is a side view showing an example configuration of a main section near a lens included in the lighting apparatus according to the embodiment.
FIG. 7 is an outline view showing the lens according to the embodiment.
FIG. 8 is a side view showing an example arrangement of the main section near an illuminance sensor included in the lighting apparatus according to the embodiment.
FIG. 9 is a schematic view showing an example installation of the lighting apparatus according to the embodiment.
FIG. 10 is a sectional view showing an example of the main section near a periphery of the lighting apparatus according to the embodiment.
FIG. 11 is a sectional view showing another example of the main section near the periphery of the lighting apparatus according to the embodiment.
FIG. 12 is a sectional view showing further example of the main section near the periphery of the lighting apparatus according to the embodiment.
FIG. 13 is a side view showing an example configuration of a first ring material.
FIG. 14 is a front view showing an example configuration of a second ring material.
FIG. 15 is a schematic view showing an example state of the lighting apparatus attached to an attachment surface according to the embodiment.
FIG. 16 is a schematic view showing another example state of the lighting apparatus attached to the attachment surface according to the embodiment.
FIG. 17 is a plain view showing a front surface of a center cover.
FIG. 18 is a plain view showing a back surface of the center cover.
FIG. 19 is an outline perspective view showing a center plate.
FIG. 20 is a schematic view showing an example method to set a position of the center cover.

### [Best Mode for Carrying Out the Invention]

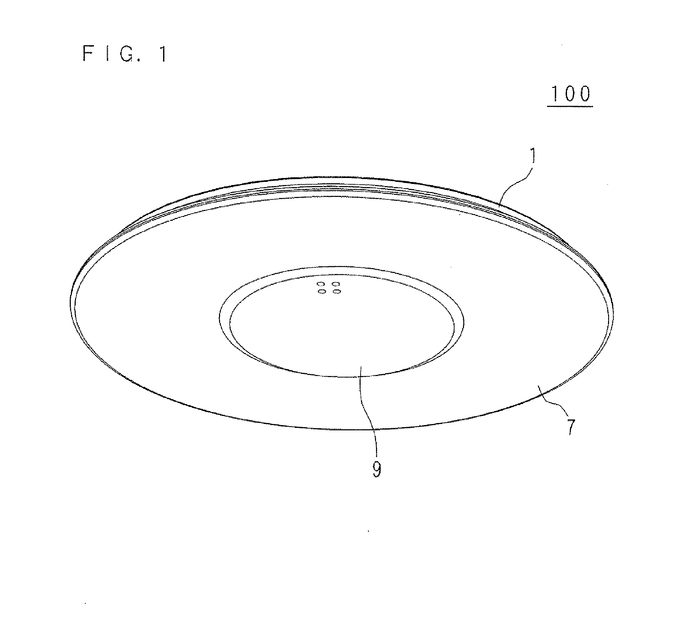

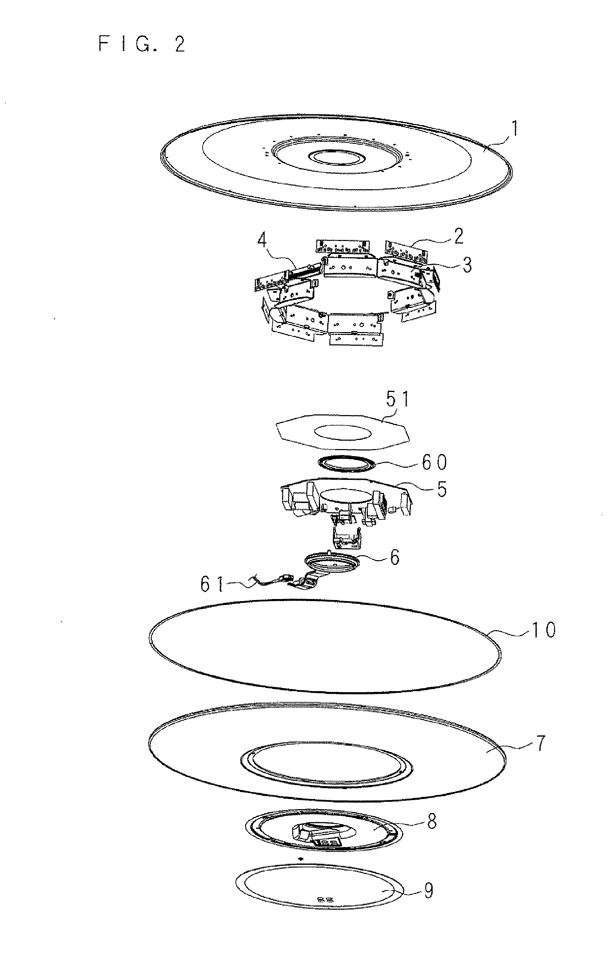

Hereinafter, an embodiment of the present invention is described in detail with reference to the drawings. FIG. 1 is an outline view showing an example configuration of a lighting apparatus 100 according to the embodiment. FIG. 2 is an exploded perspective view showing an example of the lighting apparatus 100 according to the embodiment. The lighting apparatus 100 is described below in a context of ceiling light that can be attached to and removed from an attachment surface (parallel to a transverse section of the lighting apparatus 100), such as a ceiling. However, it should be understood that the lighting apparatus 100 according to the embodiment is not limited to the ceiling light.

As shown in FIG. 1, the lighting apparatus 100 includes a chassis 1 made of metal (e.g., aluminum) in a disk shape, as a main body of the lighting apparatus 100. The chassis 1 is attached to e.g., the ceiling. A translucent cover 7 is attached to the chassis 1. The translucent cover 7 is formed in a disk shape and provided with a light diffuse reflection property. At the center of translucent cover 7, a disk shaped center cover 9 is attached. The center cover 9 can be removed from the center of translucent cover 7.

As shown in FIG. 2, the lighting apparatus 100 includes not only the chassis 1, the translucent cover 7 and the center cover 9, but also eight LED modules 2, eight radiation fins 3 whose cross section are formed in substantial "U" shape and which is made of high thermal conductive metal, such as aluminum, eight lenses 4 for directing light emitted from the LED modules 2 to a predetermined direction, an octagonal circuit board 5 whose center is opened and which mounts a power supply unit (power supply circuit) supplying predetermined current to the LED modules 2 and a control unit (control circuit) controlling brightness of the LED modules 2, an insulation sheet 51 for electrically insulating the circuit board 5 from the chassis 1, a first ring material 6 and a second ring material 60 utilized as an interlocking portion for interlocking to an adapter 63 described later, a loop shaped elastomer 10 for preventing the insect from landing into the lighting apparatus 100, a harness 61 having a connector fixed to the first ring material 6 and leading power of commercial power source to the circuit board 5, a center plate 8 and the like.

The first ring material 6 and the second ring material 60 are interlocked with the circuit board 5 being sandwiched. The radiation fin 3, the LED module 2 and the lens 4 are fixed with screws or the like on each outer side of the octagonal circuit board 5. Furthermore, the radiation fin 3 is fixed with screws or the like onto not only the center plate 8 but also the chassis 1.

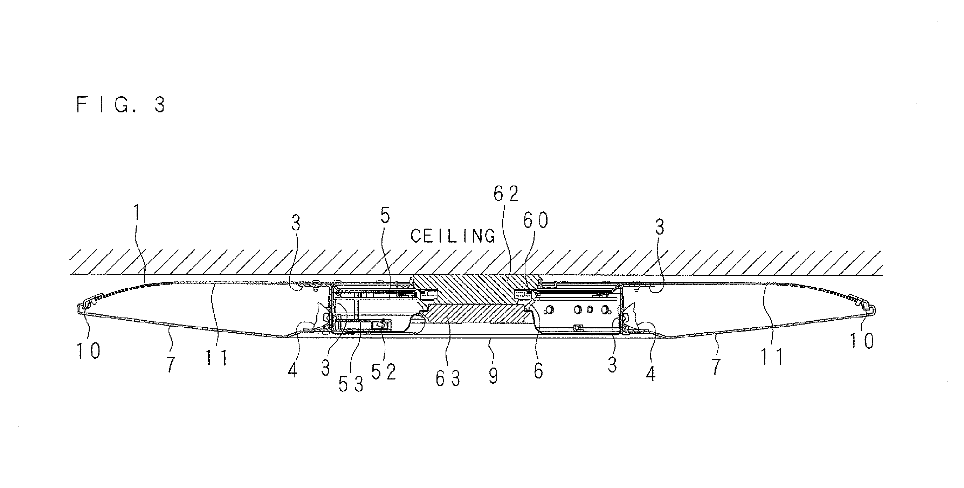

FIG. 3 is a sectional view showing an example configuration of a main section included in the lighting apparatus 100 according to the embodiment. As shown in FIG. 3, the adapter 63 is formed in a flat column shape. In addition, the adapter 63 includes a connector (not shown) connected to the commercial power source via a power wire, and is hung on (engaged with) a ceiling socket (hang-up unit) 62. Thus, the adapter 63 is electrically and mechanically connected to the ceiling socket 62. Because the connector (not shown) of the adaptor 63 is connected to the connector of the harness 61, the AC voltage of commercial power source is provided to the circuit board 5. In addition, because the adapter 63 is interlocked with any one of the first ring material 6 and second ring material 60 that are fixed to the chassis 1, the lighting apparatus 100 can be installed onto the ceiling.

The circuit board 5 is connected to a sensor board 53 mounting an illuminance sensor 52. For example, the illuminance sensor 52 includes a phototransistor or photodiode, and outputs an electric signal based on the detected illuminance. A control unit (not shown) adjusts the brightness of light emitted from the LED module 2, based on the illuminance detected by the illuminance sensor 52. For example, the control unit controls the current provided to the LED module 2 so as to make the illuminance detected by the illuminance sensor 52 become a predetermined value.

The lens 4 focuses light emitted from the LED module 2 and directs the focused light to a direction inclined about 5-10 degrees above the horizon (i.e., inclined toward the direction of ceiling). On the inner surface of chassis 1, a reflection surface 11 is arranged. For example, a reflection sheet is applied on the inner surface of chassis 1 for arranging the reflection surface 11. Alternatively, the inner surface of chassis 1 may be coated with reflection material for arranging the reflection surface 11. The light emitted from the lens 4 is reflected by the reflection surface 11 and directed downward. The downward light passes the translucent cover 7 and then is diffused below the lighting apparatus 100.

The radiation fin 3 is fixed with a screw or the like onto the circuit board 5. The radiation fin 3 is formed in a substantial "U" shape. One surface of the radiation fin 3 is fixed with a screw or the like onto the chassis 1 and the other surface thereof is fixed with a screw or the like onto the center plate 8. Thus, the circuit board 5 is fixed to the chassis 1 that is the main body of the lighting apparatus 100.

The loop shaped elastomer 10 is arranged between the periphery of chassis 1 and the periphery of translucent cover 7, preventing the landing of insect. The details of elastomer 10 are described later.

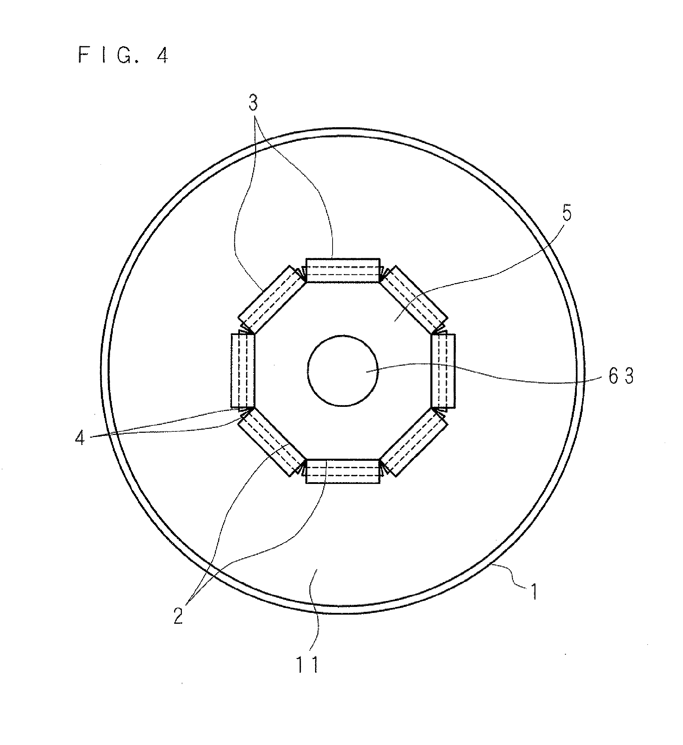

FIG. 4 is a plain view showing an example arrangement of the main section near the circuit board 5 included in the lighting apparatus 100 according to the embodiment. As shown in FIG. 4, eight radiation fins 3 are fixed along the outer sides of octagonal circuit board 5 whose center is an opening portion 63. The LED module 2 is attached to each radiation fin 3. As utilized for focusing the light emitted from the LED modules 2, the lenses 4 are arranged along the octagonal shape. The lens 4 may be fixed to the radiation fin 3 or the circuit board 5. When the LED module 2 starts illuminating, the light of the LED module 2 is emitted from the center of chassis 1 to the periphery of chassis 1.

The reflection surface 11 brings the so-called specular reflection on a part of light emitted from the LED module 2. The light reflected by the reflection surface 11 is incident on the inner surface of translucent cover 7 and diffused inside the translucent cover 7, and emitted from the outer surface of translucent cover 7 to the outside of the lighting apparatus 100.

As described above, the direction of light emitted from each LED module 2 is configured to be the direction from the center of chassis 1 to the periphery of chassis 1, and be across the direction in which the lighting apparatus 100 should illuminate. Thus, it is possible to reduce the amount of light that is directly incident on the translucent cover 7 and emitted to the outside of the lighting apparatus 100, among all the light emitted from the LED module 2. Furthermore, it is possible to keep the eyes of user away from directly catching large amount of light emitted from the LED module 2. Therefore, it is possible to reduce the so-called glare phenomenon.

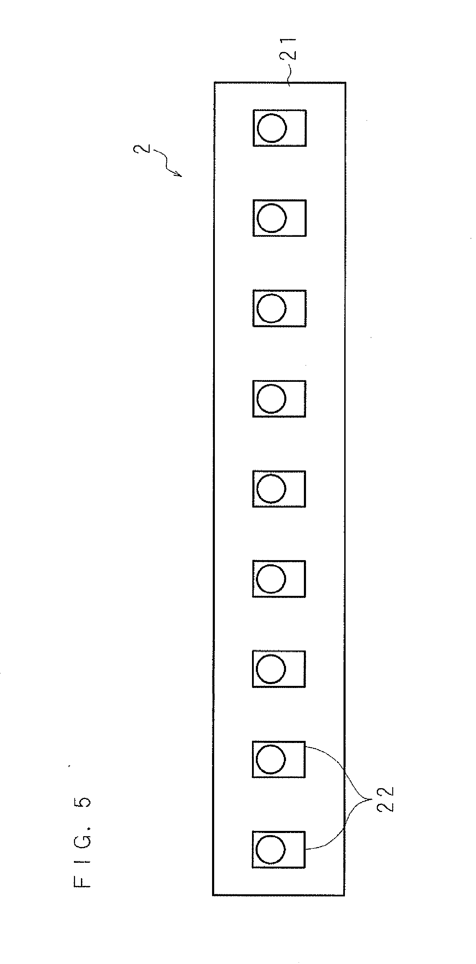

FIG. 5 is a plain view showing an example configuration of the LED module 2 according to the embodiment. As shown in FIG. 5, the LED module 2 includes a rectangular LED board 21, and includes nine LEDs 22 that are aligned along the longitudinal direction of LED board 21. For example, the LED 22 emits daylight colored light. Alternatively, another color may be utilized for the light emitted from the LED 22. The nine LEDs 22 are connected in series, and the LED module 2 is configured to be a serial light source unit. The LED board 21 is made of metal, such as iron or aluminum, and additionally serves as the thermal conductor that conducts heat from the LED 22 to the radiation fin 3. It should be noted that the number of LEDs 22 is not limited to nine.

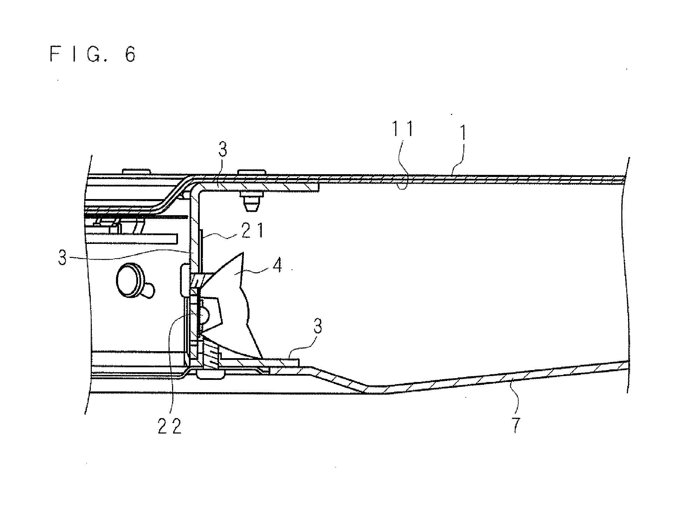

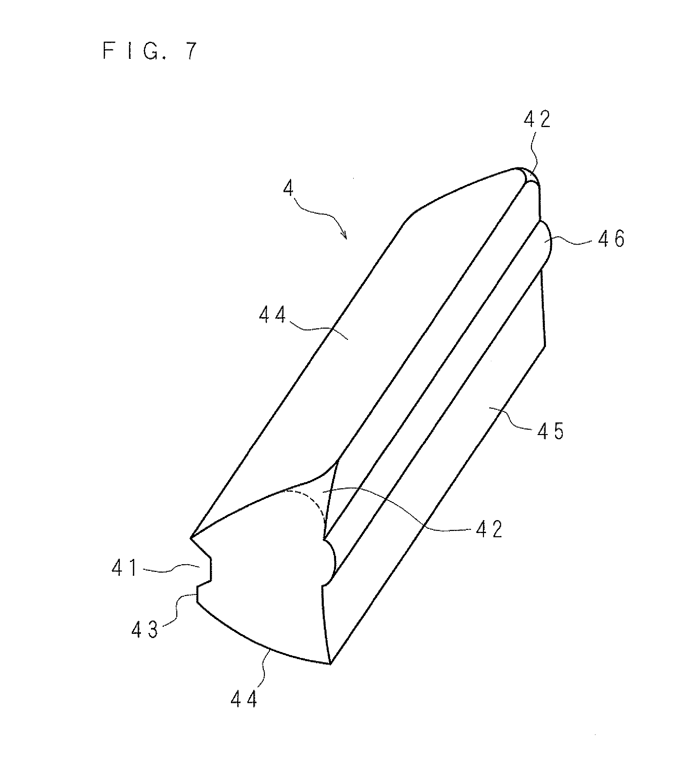

FIG. 6 is a side view showing an example configuration of a main section near the lens 4 included in the lighting apparatus 100 according to the embodiment. FIG. 7 is an outline view showing the lens 4 according to the embodiment. The lens 4 is formed of bar body whose cross section is substantially rectangular shape. The light incident surface 43 of lens 4 is formed with a groove 41 for accommodating the LED 22 along the longitudinal direction. The light emittance surface 45 of lens 4 is formed in a gentle concave shape, and is formed with a convex surface 46 at the center along the longitudinal direction. The lateral surface 44 of lens 4 is formed along the longitudinal direction, and is formed to be a curved surface. Thus, the width (height) of lens 4 is increased gradually from the side of light incident surface 43 to the side of light emittance surface 45. One of the lateral surfaces 44 is formed with bent side portions 42 at the both sides near the light emittance surface 45 of lens 4. The bent side portion 42 is formed at the corner portion of lens 4 to be a curved surface whose diameter is a predetermined amount.

As shown in FIG. 6, the light is emitted from the LED 22 arranged on the LED board 21 that is adhered on the radiation fin 3, and the emitted light is incident on the light incident surface 43 of lens 4. The incident light is reflected by the lateral surface 44 of lens 4 to be substantial parallel light, and is emitted from the light emittance surface 45.

As shown in the plain view of FIG. 4, both end portions of lens 4 partially protrude from both end portions of radiation fin 3. Thus, if the bent side portions 42 were not formed as shown in FIG. 7, the light reflected by the light emittance surface 45 without passing the light emittance surface 45 happens to pass the both end portions of lateral surface 44 and to be directly incident on the translucent cover 7. Therefore, it is not preferred visually, because the light and dark stripe pattern or spot may be caused on the translucent cover 7.

The bent side portion 42 as shown in FIG. 7 can make the light reflected by the light emittance surface 45 toward the lateral surface 44 further be reflected by the bent side portions 42 toward the light emittance surface 45. Therefore, it is possible to reduce the amount of light passing at the both end portions of lateral surface 44, to reduce the amount of light directly incident on the translucent cover 7, and to prevent the light and dark stripe pattern or spot on the translucent cover 7. It may be considered to manufacture the radiation fin 3 whose shape is adjusted to cover the lens 4 in accordance with the protruding portions of lens 4 shown in FIG. 4. However, the consideration may bring the complex shape of radiation fin 3 and the const increase.

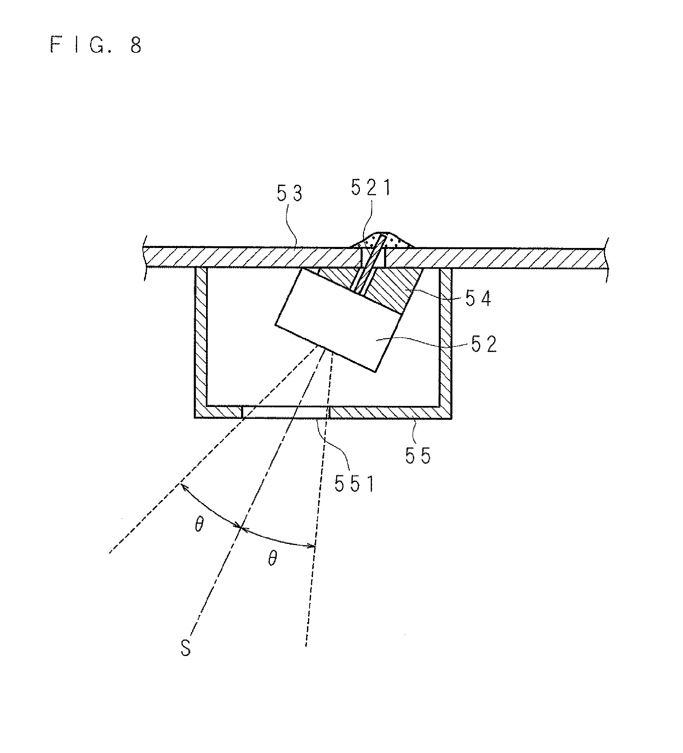

FIG. 8 is a side view showing an example arrangement of the main section near the illuminance sensor 52 included in the lighting apparatus 100 according to the embodiment. As shown in FIG. 8, the illuminance sensor 52 is mounted on the sensor board 53. A spacer 54 is arranged between the sensor board 53 and the base surface of illuminance sensor 52 at the side of lead 521. The spacer 54 is formed in a tapered shape whose thickness is decreased in a direction from one side surface to the other side surface. A threaded hole is formed in the spacer 54, and the two leads 521 of illuminance sensor 52 thread into the threaded hole. The lead 521 is soldered to a wiring pattern on the back surface of sensor board 53.

The illuminance sensor 52 can receive the light in a light receive range as shown in FIG. 8. The center direction of light receive range (represented by "S" in FIG. 8) is inclined from the direction perpendicular to the transverse section (e.g., the surface parallel to the attachment surface on the ceiling) of lighting apparatus 100. Therefore, the illuminance sensor 52 is fixed to the chassis 1 in such a manner that it is inclined from the rotation axis utilized for rotating the chassis 1 described later. For example, in the case that the lighting apparatus 100 is attached to the attachment surface on the ceiling, the center direction of light reception range ("S" direction) of the illuminance sensor 52 is inclined from the rotation axis rotating the chassis 1. When the chassis 1 is rotated by the rotation mechanism that is an illuminance detection range changing unit described later, the direction of light receive range of the illuminance sensor 52 is adjusted in order to detect the illuminance on the floor in the back of room (no window area) far from the window, door and opening to the outside, and the illuminance detection range of the illuminance sensor 52 can be changed to inhibit detecting the illuminance of floor surface near the window. Thus, even when the light is incident from the outside through the window or the like and the room becomes brighter at some area (e.g., floor) near the window, the illuminance sensor 53 can change the illuminance detection range in the lighted area which is lighted by the LED 22, can detect the illuminance of dark area in the room and can adjust the brightness of light emitted by the light source. Therefore, it is possible to prevent excessive reduction of illuminance for the dark area where the light is hardly incident from the outside, and to prevent the excessive adjustment of illuminance. Alternatively, the illuminance detection range may be changed by the rotation mechanism described later, while the illuminance sensor 52 may be fixed to the chassis 1 without being inclined from the rotation axis. However, when the illuminance sensor 52 is inclined from the rotation axis, it is possible to detect the illuminance of the lighted area far from the floor directly under the lighting apparatus 100. Therefore, it is possible to detect the illuminance for the area where the light is hardly incident from the outside, in the case that the lighted area far from the floor directly under the lighting apparatus 100 is the area where the light is hardly incident from the outside.

A restrictor 55 is fixed on the sensor board 53. One surface of the restrictor 55 is opened, and the other surface is formed with a circular restriction hole 551 having a predetermined diameter. The restrictor 55 covers the illuminance sensor 52, and restricts the light-acceptance angle of the illuminance sensor 52. The detection range of illuminance sensor 52 becomes a conical shape whose cone point is the position of illuminance sensor 52, and the light-acceptance angle is represented by the half angle θ of the cone point. For example, the restriction of light-acceptance angle θ can lead to inhibit detecting the illuminance of area where the light is incident from the outside, and to detect the illuminance of area where the light is hardly incident from the outside. Therefore, it is possible to prevent the influence of bright area in the room and to accurately detect the illuminance of dark area in the room, even when a part of the room becomes brighter by the incident light from the outside. It should be noted that the restrictor 55 is not limited to the box as shown in FIG. 8. Alternatively, the restrictor 55 may be formed in a plate shape, a seal member with circular transparent window may be applied to the light accepting unit of illuminance sensor 52, or a cylindrical member is arranged front of the light accepting unit so as to restrict light-acceptance angle of illuminance sensor 52. In this embodiment, the box shaped restrictor 55 is formed independently from the illuminance sensor 52. However, the restrictor 55 may be formed integrally with the illuminance sensor 52. Thus, when the illuminance detection range changing unit is configured to move the illuminance sensor 52 relative to the chassis 1 as described below, it is possible to move the restrictor 55, as well as the illuminance sensor 52.

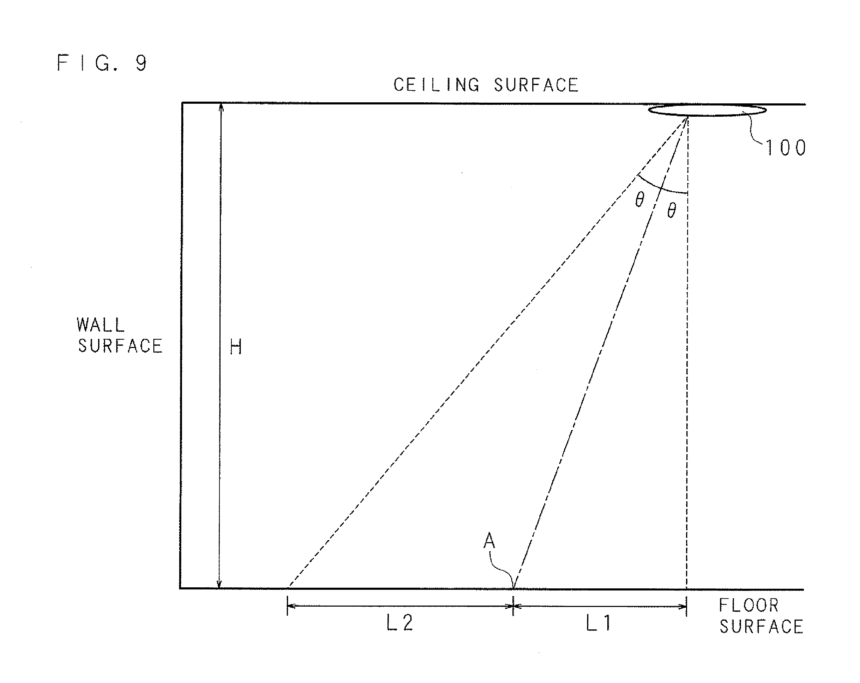

FIG. 9 is a schematic view showing an example installation of the lighting apparatus 100 according to the embodiment. The example of FIG. 9 shows the detection range of illuminance in which the illuminance sensor 52 can detect, in the case that the restrictor 55 restricts the light-acceptance angle θ of the illuminance sensor 52. For example, when the lighting apparatus 100 is installed on the ceiling whose height is "H", the detection range of illuminance sensor 52 covers the area on the floor whose diameter is "L1 + L2" and whose center is the position "A" that is substantially L1 away from the position underneath the lighting apparatus 100, and thus it is possible to detect the illuminance within the detection range.

Assume the case that the light-acceptance angle θ is ±20 degree and the height of ceiling H is 2.4 m. In this assumed case, the detection range of illuminance sensor 52 covers the area on the floor whose diameter is about 2 m and whose center is the position "A" that is substantially 1 m away from the position underneath the lighting apparatus 100. For example, the lighting apparatus 100 is installed near the center of the room and the light-acceptance angle θ is ±20 degree, it is possible to detect the illuminance on the area even near the end in the room where almost 6-15 tatami can be applied and the light is hardly incident from the outside. Although the light-acceptance angle θ may be less than the 20 degree based on the room size, the window position and the like. However, the 20 degree is preferred for the light-acceptance angle θ in order to accurately detect the illuminance of dark area in the room.

It should be noted that the light-acceptance angle θ is not limited less than the 20 degree. For example, the light-acceptance angle θ may be less than 30 degree, but should not cause reducing the light reception sensitivity of the illuminance sensor 52. Furthermore, the light-acceptance angle θ can be set by changing the diameter of the restriction hole 551 in the restrictor 55, or by changing the distance between the restriction hole 551 and the illuminance sensor 52.

For keeping the illuminance sensor 52 whose center of light reception range is inclined, it is possible to utilize a spacer that lifts one of base surfaces of the illuminance sensor 52, instead of the spacer 54. The spacer does not require the threaded hole for threading the leads.

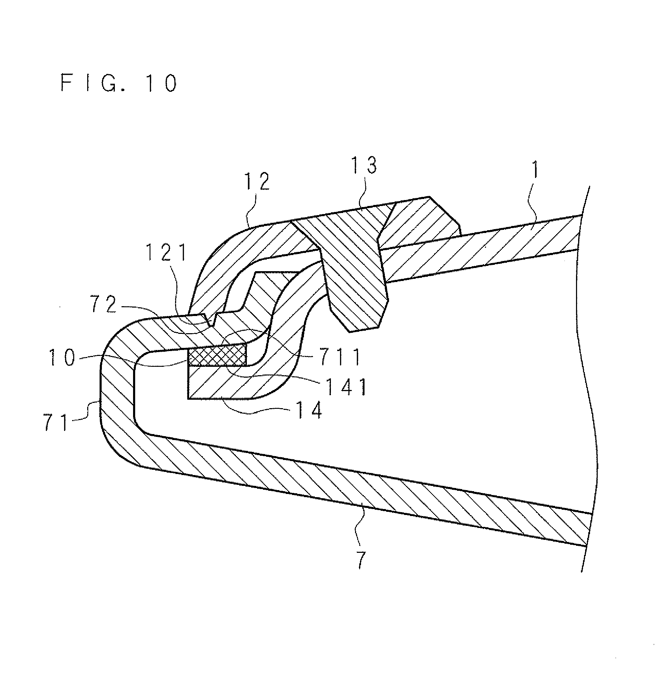

Next, it will be described about the insect prevention mechanism. FIG. 10 is a sectional view showing an example of the main section near a periphery of the lighting apparatus 100 according to the embodiment. The translucent cover 7 is formed with an attaching portion 71 at the periphery which is bent in a substantial "U" shape. Since the chassis 1 is attached to such the bent translucent cover 7, it is possible to make a space including illumination parts such as the LED module 2 and the circuit board 5. Furthermore, the chassis 1 is formed with an outer portion 14 at the periphery whose cross section is bent in a substantial "S" shape. The space includes a joint portion 711 and a joint portion 141 that joint the chassis 1 and the translucent cover 7 with the outer portion 14 of chassis 1 inserted into the attaching portion 71. Furthermore, a ring shaped elastomer 10 is applied between the outer portion 14 and the attaching portion 71, and serves as a sealing member that seals the joint portion 711 and the joint portion 141. For example, the elastomer 10 is made of ethylene-propylene-diene monomer rubber (EPDM) that has a high weathering property, ozone resistant property, cold resistant property, heat resistant property and the like, but not have a permanent alternation property. It may be possible to utilize formed rubber or formed plastic which has an elastic property, instead of EPDM. Such a sealing member may be made of some material, instead of the elastic material, which can seal the joint portions and prevent the insect from landing into the lighting apparatus.

Since the attaching portion 71 is only bent in the substantial "U" shape at the periphery of translucent cover 7, it does not require increasing the height of translucent cover 7. Thus, it is possible to manufacture the thin type apparatus. In addition, since the elastomer 10 is applied between the joint portion 141 of outer portion 14 of the chassis 1 and the joint portion 711 of the attaching portion 71 in the space that is formed by the bent attaching portion 71 and includes the illumination parts, the elastomer 10 can seal with the space. Thus, it does not require forming an extra space for arranging the elastomer 10. Hence, it is possible to manufacture the thin type of lighting apparatus 100. Therefore, the elastomer 10 can seal the gap between the chassis 1 and the translucent cover 7, and prevent the insect from landing into the apparatus.

In addition, this lighting apparatus includes a pressing material 12 that presses the joint portion 711 of the attaching portion 71 toward the joint portion 141 of the outer portion 14. The pressing material 12 is formed in a plate shape with a protruding portion 121 at the one end and with a hole near the center to be fixed by a screw 13. The pressing material 12 can be fixed to the chassis 1 by tightening the screw 13 to the chassis 1. In other words, since the pressing material 12 presses the joint portion 711 of the attaching portion 71 toward the joint portion 141 of the chassis 1 inserted inside the attaching portion 71 of the translucent cover 7 and is fixed to the chassis 1, it is possible not only to manufacture the thin type apparatus, but also to accurately attach the chassis 1 and the translucent cover 7. Furthermore, the elastomer 10 can contact with the joint portion 141 and joint portion 711 and accurately seal the gap. Plural pressing materials 12 (e.g., eight pressing materials) can be arranged along the periphery of chassis 1 with a predetermined distance away from each other. Therefore, it is possible to accurately fix the chassis 1 and the translucent cover 7. In the case that the light source is the LED, it is not required considering the exchange of LED for the designed configuration of the lighting apparatus, because the life of LED is enough longer than the incandescent light bulb and the fluorescent lamp and the LED needs to be exchanged less than the incandescent light bulb and the fluorescent lamp. The configuration shown in FIG. 10 can implement the thinnest type of lighting apparatus.

In addition, an attaching hole 72 is formed on the outer surface of the attaching portion 71 for attaching the pressing material 12. Since the protruding portion 121 of the pressing material 12 is attached to the attaching hole 72 formed on the attaching portion 71 of the translucent cover 7, it is possible not only to manufacture the thin type apparatus but also to accurately attach the chassis 1 and translucent cover 7. In addition, the protruding portion 121 serves for determining the position where the chassis 1 and translucent cover 7 are attached.

As shown in FIG. 10, the periphery of the lighting apparatus 100 is the attaching portion 71 obtained by bending the translucent cover 7. Thus, the light emitted from the LED module 2 can pass without being shielded. Hence, the light can be also emitted horizontally from the periphery of the lighting apparatus 100. Therefore, the lighting apparatus 100 according to the embodiment can implement the wider light distribution property and implement the wider light emittance range.

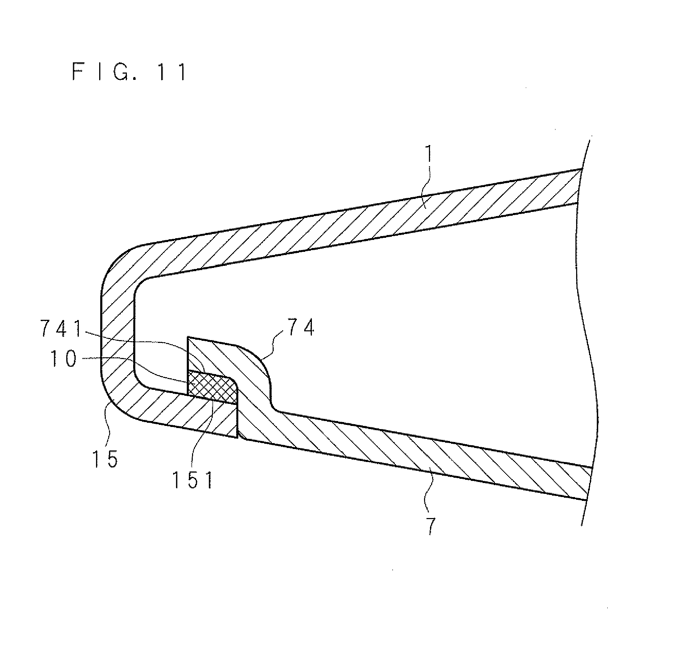

FIG. 11 is a sectional view showing another example of the main section near the periphery of the lighting apparatus 100 according to the embodiment. As shown in FIG. 11, the chassis 1 is formed with an attaching portion 15 bent to be a substantial "U" shape at the periphery of the chassis 1. Since the translucent cover 7 is attached to the bent chassis 1, it is possible to form the space including the illumination parts, such as the LED module 2 and the circuit board 5. The space is provided with a joint portion 741 and a joint portion 151 for jointing the chassis 1 and the translucent cover 7 with an outer portion 74 of the translucent cover 7 that is formed in a substantial "S" shape and inserted to the attaching portion 15. In addition, the ring shaped elastomer 10 is applied between the outer portion 74 and the attaching portion 15, and serves as the sealing member for sealing the gap between the joint portion 741 and the joint portion 151. Since it is required to form only the attaching portion 15 bent in the substantial "U" shape at the periphery of chassis 1, the height of chassis 1 is not increased and the thin apparatus can be manufactured. In addition, since the elastomer 10 is applied between the outer portion 74 of the translucent cover 7 and the attaching portion 15, the elastomer 10 can seal the gap between the chassis 1 and the translucent cover 7. Therefore, it is possible to prevent the insect from landing into the lighting apparatus. Similar to the example of FIG. 10, the example of FIG. 11 may include a member similar to the pressing material 12. In such a case, it is possible not only to accurately attach the chassis 1 and the translucent cover 7 but also to make the elastomer 10 seal the joint portions more tightly.

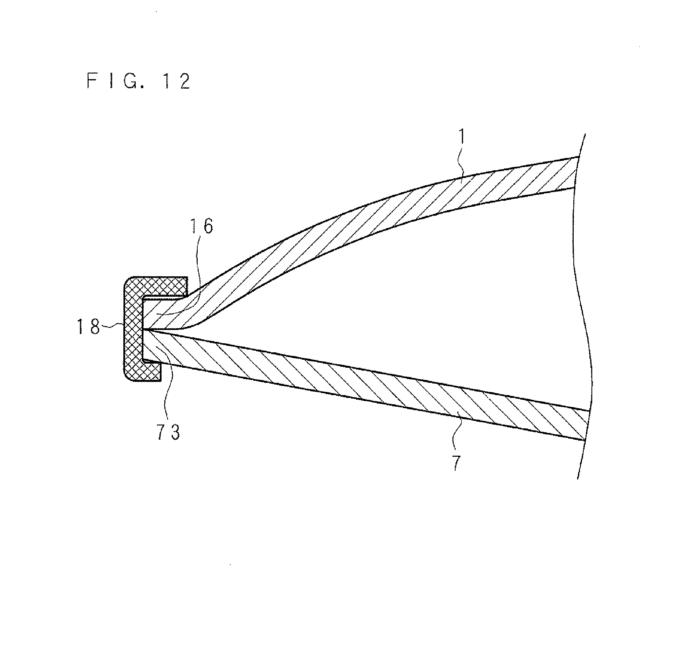

FIG. 12 is a sectional view showing further example of the main section near the periphery of the lighting apparatus 100 according to the embodiment. As shown in FIG. 12, an outer portion 16 of the chassis 1 contacts an outer portion 73 of the translucent cover 7, the outer portions 16, 73 are covered by an elastomer 18 whose cross section is formed in a substantial "U" shape. For example, the elastomer 18 is made by the extruding process. The outer portion 16 of the chassis 1 only contacts with the outer portion 73 of the translucent cover 7, and the chassis 1 and the translucent cover 7 do not require the bent structure portions. Therefore, it is possible to manufacture the thin type apparatus. In addition, since the elastomer 18 is applied to surround the periphery and to cover the outer portions 16, 73, it is possible to prevent the insect from landing into the lighting apparatus. In addition, since the elastomer 18 surrounds the periphery of the lighting apparatus 100, the elastomer 18 serves as a visual decoration, too.

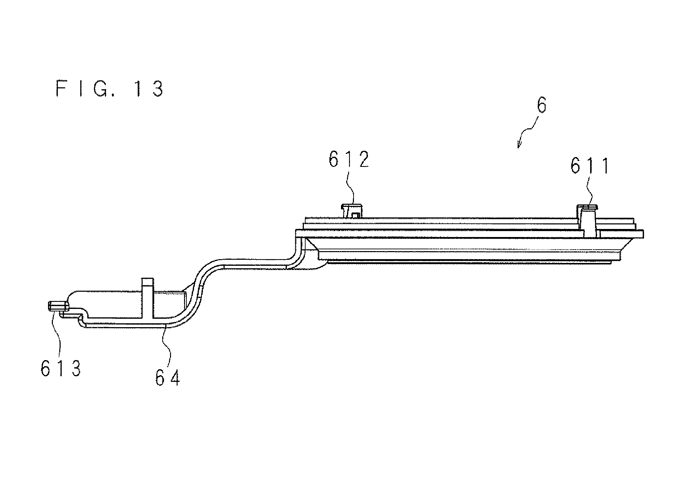

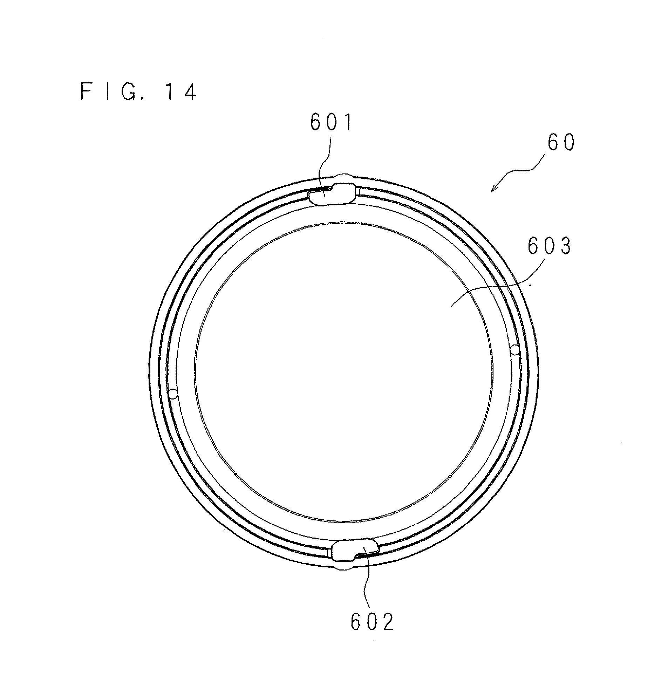

FIG. 13 is a side view showing an example configuration of a first ring material 6. FIG. 14 is a front view showing an example configuration of a second ring material 60. The first ring material 6 is formed in a ring shape and includes a supporting portion 64 that is extending from a part of side surface. The supporting portion 64 can fix the connector of the harness 61. The first ring material 6 is formed with protruding portions 611, 612, 613 for fixing the first ring material 6 to the center plate 8 at a predetermined portion of the side surface and end of the supporting portion 64.

As shown in FIG. 14, the second ring material 60 is formed in a ring shape whose center is an opening portion 603, and includes threaded holes 601, 602 to fit the protruding portions 611, 612. Since the protruding portions 611, 612 of the first ring material 6 are inserted into the threaded holes 601, 602 of the second ring material 60, the circuit board 5 can be sandwiched and fixed by the first ring material 6 and the second ring material 60. In addition, the threaded holes 601, 602 are formed in a substantial oval shape and the size of one end is larger than the size of the other end. Therefore, when one of the protruding portions 611, 612 is inserted into the larger one of threaded holes 601, 602 and is rotated circumferentially, the other of the protruding portions 611, 612 is accurately fixed at the smaller one of threaded holes 601, 602.

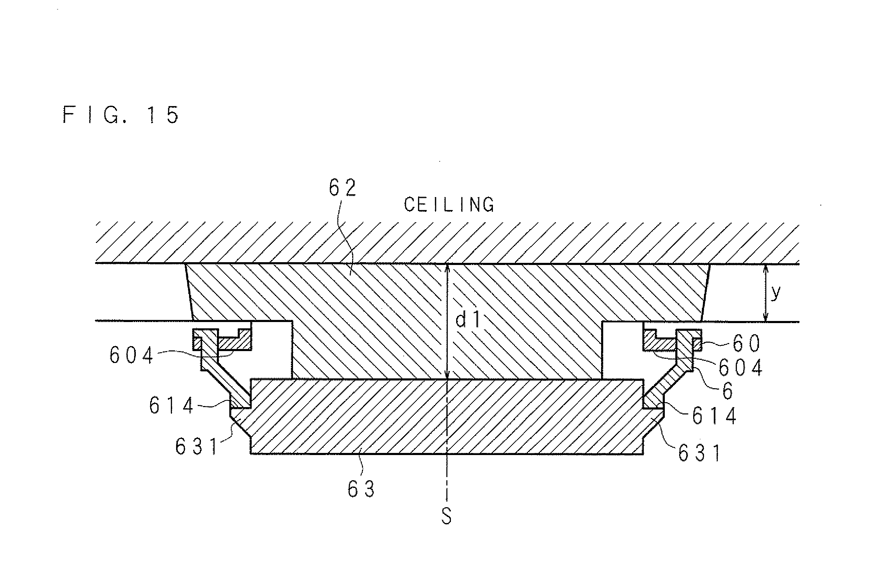

FIG. 15 is a schematic view showing an example state of the lighting apparatus 100 attached to an attachment surface according to the embodiment. On the attachment surface, such as the ceiling, the ceiling socket 62 is previously arranged and connected to the power wire of the commercial power source. The ceiling socket 62 includes engaging holes (not shown) at the opposite places in which connection terminals connected to the power wire are mounted. The adapter 63 includes a hooking blade (not shown) for engaging with the engaging hole of the ceiling socket 62. Since the hooking blade is engaged with the engaging hole, the adapter 63 can be connected to the ceiling socket 62, mechanically and electrically.

The adapter 63 is formed in a substantial disk shape, and includes interlocked portions 631 at the opposite places on the side surfaces which are biased in a radial direction from the center and can move radially. The cross section of interlocked portion 631 is substantial triangle shape, and the interlocked portion 631 can be moved to the center by the pressure added from the outside.

Thus, when the lighting apparatus 100 is lifted from the bottom to the ceiling for attaching to the ceiling, the interlocking portion 604 firstly pushes the interlocked portion 631. Hence, the interlocked portion 631 moves toward the center. When the lighting apparatus 100 is further lifted from the bottom, the interlocked portion 631 is biased and moved toward the outside and the interlocking portion 604 interlocks to the interlocked portion 631 so as to fix the lighting apparatus 100.

In addition, when the lighting apparatus 100 is lifted from the bottom to the ceiling, the interlocking portion 614 pushes the interlocked portion 631. Thus, the interlocked portion 631 moves toward the center. When the lighting apparatus 100 is further lifted from the bottom, the interlocked portion 631 is biased and moved toward the outside and the interlocking portion 614 interlocks to the interlocked portion 631 so as to fix the lighting apparatus 100.

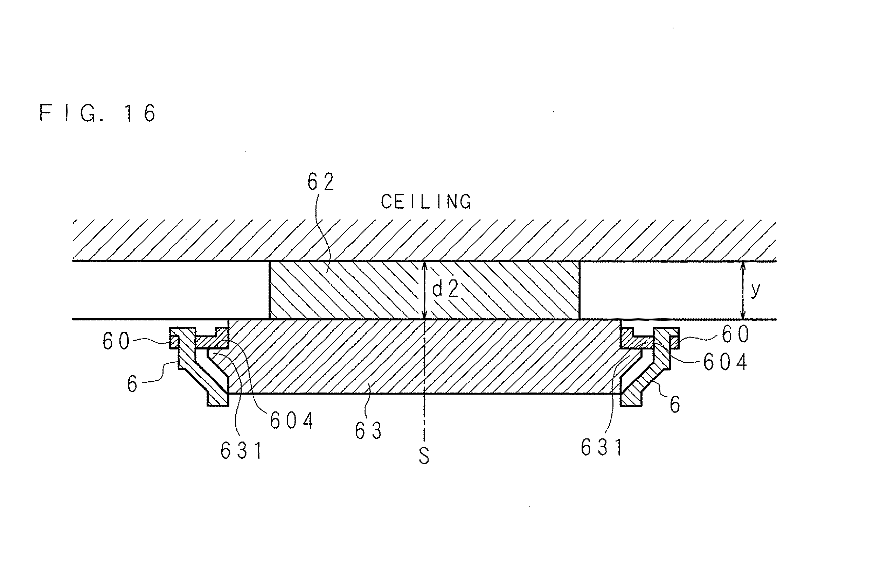

The first ring material 6 and the second ring material 60 respectively include the interlocking portion 614 and the second interlocking portion 604 that interlock to the interlocked portion 631. In addition, the lighting apparatus 100 includes the chassis 1 as the main body, and the chassis 1 is configured to be rotatable about the adapter 63. In other words, when the lighting apparatus 100 is interlocked to the adapter 63, the chassis 1 can be rotated about the rotation axis that is the line S shown in FIG. 15 and FIG. 16 described later and passes the center of adapter 63. Thus, the rotation mechanism of chassis 1 serving as the illuminance detection range changing unit can change the illuminance detection range of the illuminance sensor 52 which is attached to the chassis 1 by fixing.

Hence, in the case that the lighting apparatus 100 is attached to the attachment surface, such as the ceiling, the illuminance detection range can be changed to direct the light reception center of illuminance sensor 52 toward the floor far from the opening to the outside, such as a window and door, where the light is incident from the outside, in accordance with the layout of the room. Therefore, it is possible to prevent the excessive adjustment of brightness in the various type of the room. Although the rotation mechanism (i.e., the illuminance detection range changing unit) is configured to rotate with attaching the lighting apparatus 100 to the adapter 63, the lighting apparatus 100 may be alternatively attached to the adapter 63 after the chassis 1 is rotated to adjust the position of illuminance detection range of the illuminance sensor 52.

The illuminance detection range changing unit is explained above in the context of illuminance sensor 52 which is fixed to the chassis 1 (i.e., main body of the lighting apparatus) and whose illuminance detection range is changed by the rotation of chassis 1. Alternatively, the illuminance detection range changing unit may move the illuminance sensor 52 relative to the chassis 1 so as to change the illuminance detection range. For example, the illuminance sensor 52 shown in FIG. 8 may be configured to be movable relatively to the sensor board 53 fixed to the chassis 1. The sensor board 53 to which the illuminance sensor 52 is fixed may be configured to be movable, for the mechanism moving the illuminance sensor 52 relatively to the chassis 1. Thus, the rotation of chassis 1 is not required for changing the light reception range of light-acceptance angle of the illuminance sensor 52. Therefore, it is possible to change the illuminance detection range.

In the case that the ceiling socket 62 has the size "d1" in the vertical direction (thickness) that is relatively larger as shown in FIG. 15, the distance "y" between the ceiling surface and the chassis 1 can be properly shorter by interlocking the interlocking portion 614 of first ring material 6 to the interlocked portion 631 of adapter 63.

FIG. 16 is a schematic view showing another example state of the lighting apparatus 100 attached to the attachment surface according to the embodiment. In the example of FIG. 16, the ceiling socket 62 has the size "d2" in the vertical direction (thickness) that is smaller than the example of FIG. 15. In the example of FIG. 16, the distance "y" between the ceiling surface and the chassis 1 can be properly shorter by interlocking the interlocking portion 604 of second ring material 60 to the interlocked portion 631 of adapter 63.

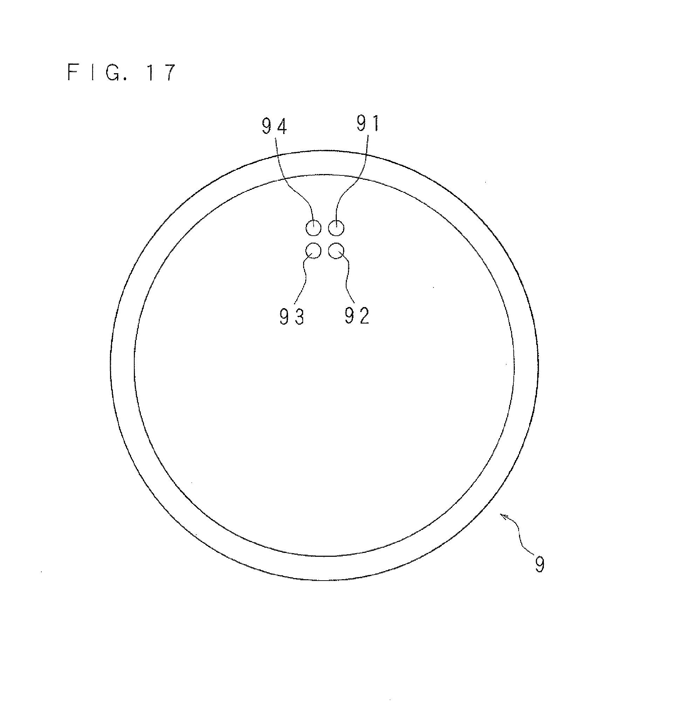

FIG. 17 is a plain view showing a front surface of the center cover 9. The center cover 9 is formed with plural transparent windows 91, 92, 93, 94, each of which is in the circular shape and arranged on a proper position. For example, the transparent window 91 is configured to pass the light to be received by the illuminance sensor 52. In addition, the transparent window 92 is configured to pass remote control signals outputted from a remote control terminal (remote controller) and the like. The transparent windows 93, 94 are configured to pass light from indicating lamps that indicate operation status of the lighting apparatus 100 and the like.

In this embodiment, the translucent cover 7 is circularly arranged along the periphery of the lighting apparatus 100, and the illuminance sensor 52 is arranged near the center portion of the lighting apparatus 100. Because the illuminance sensor 52 is arranged neither on the translucent cover 7 nor near the translucent cover 7, it is possible to prevent the light emitted from the light source from being blocked by the illuminance sensor 52. Furthermore, the translucent cover 7 is kept away from the dark shadow caused by the illuminance sensor 52, and thus, it is possible to prevent uncomfortable feeling of outer appearance.

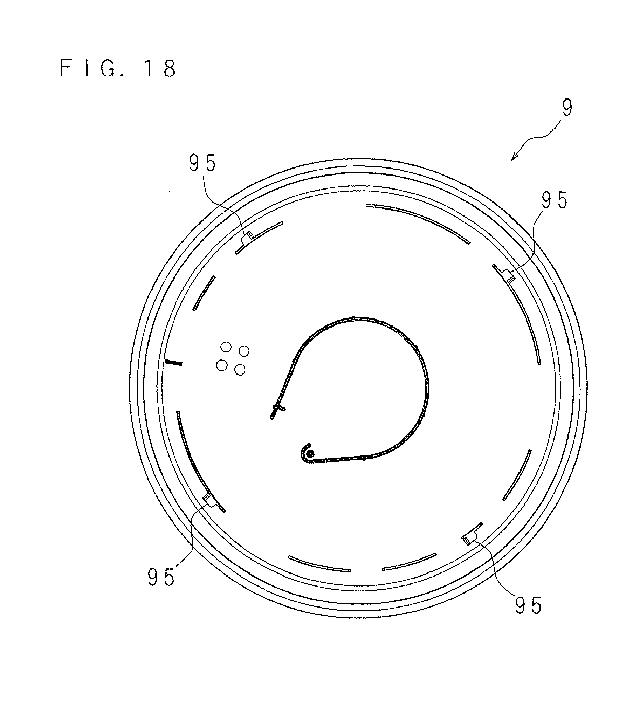

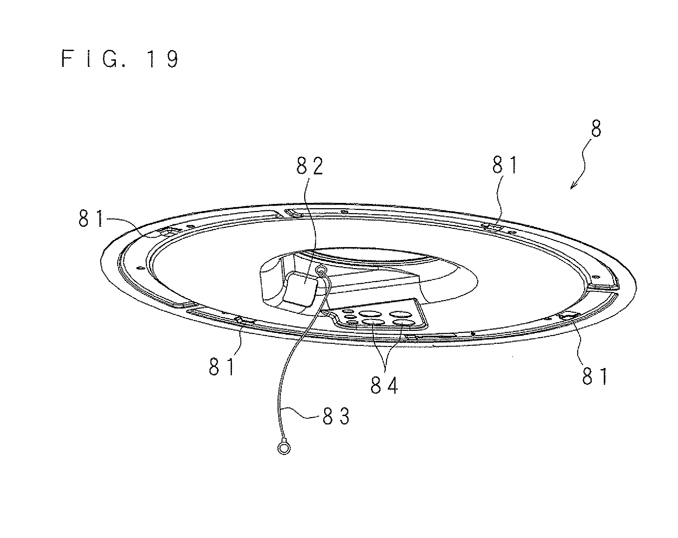

FIG. 18 is a plain view showing a back surface of the center cover 9. FIG. 19 is an outline perspective view showing the center plate 8. As shown in FIG. 18, the back surface of center cover 9 is formed with segments 95 that are arranged circumferentially with a proper distance to each other. The center plate 8 is formed with bit portions 81 that are arranged vertically. Each bit portion 81 is formed with a gap which is at a position corresponding to the segment 95 and whose size is substantially the same as the thickness of segment 95. The cross section of each bit portion 81 is formed in a substantial "L" shape. The center plate 8 is formed with opening portions 84 whose positions correspond to the transparent windows 91-94. In addition, the center plate 8 includes an attaching portion 82 for attaching the connector of harness 61.

When it is intended to attach the center cover 9 to the lighting apparatus 100, the segments 95 are adjusted to fit the positions of bit portions 81 and the center cover 9 is rotated by about an amount corresponding to the length of each bit portion 81 so as to insert the segments 95 into the gaps of bit portions 81.

A fixture such as a harness clip is provided at a proper position on the center plate 8, the harness clip is attached to a ring located at the one end of wire (or strap) 83 having a proper length and the center cover 9 is attached at the proper position to another ring located at the other end of wire 83. Therefore, it is possible to prevent the falling accident caused when the center cover 9 is attached to the lighting apparatus 100. Instead of the fixture such as a harness clip, the one end of wire 83 may be formed in a ring shape and the power wire extending from the adapter 63 may be inserted into the ring shaped one end so as to attach the wire 83 to the lighting apparatus 100.

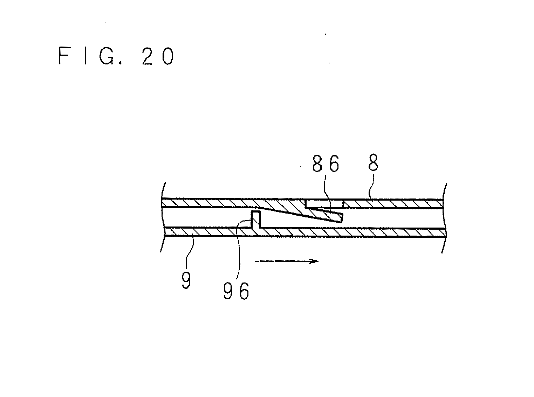

FIG. 20 is a schematic view showing an example method to set a position of the center cover 9. As shown in FIG. 20, a rib 96 is formed vertically on the back surface of center cover 9, and a spring member 86 is formed vertically on the center plate 8. The spring member 86 has an elastic property and tilts gradually far from the center plate 8 in the radial direction. When it is intended to attach the center cover 9, the center cover 9 is gradually rotated. At that time, the rib 96 is gradually slid on the surface of spring member 86 in the direction represented by the arrow, while pushing the spring member 86. After the rib 96 is slid beyond the spring member 86, the spring member 86 is recovered to the original shape by the elastic property, the end portion of spring member 86 engages with the rib 96, and then the center cover 9 is surely fixed. Therefore, it is possible to prevent the center cover 9 from being rotated easily.

It should be noted that the number of LED modules and the number of LEDs configuring each LED module shown in the embodiment described above are not limited to the drawings and may be changed. In addition, although the embodiment is explained in the context of warm white LED light source and daylight colored LED, the embodiment may be provided with another LED having color temperatures different from those of LED described above. Furthermore, the embodiment may be provided with a neutral white LED, instead of the daylight colored LED.

Although the above embodiment is explained in the context of lighting apparatus configured to be the ceiling light, the lighting apparatus is not limited to the ceiling light. Thus, the lighting apparatus may be another type of lighting apparatus different from the ceiling light. In addition, although the lighting apparatus is explained to include the LED module as the light source, the light source is not limited to be the LED module. The light source may be, for example, an organic EL.

### [Description of Reference Numerals]

| | |
|---|---|
| 1 | chassis |
| 2 | LED module (light source) |
| 3 | radiation fin |
| 4 | lens |
| 5 | circuit board |
| 6 | first ring material |
| 614 | interlocking portion |
| 60 | second ring material |
| 604 | interlocking portion |
| 7 | translucent cover |
| 15, 71 | attaching portion |
| 72 | attaching hole |
| 8 | center plate |
| 9 | center cover |
| 10 | elastomer |
| 12 | pressing material |
| 121 | protruding portion |
| 14, 16, 73, 74 | outer portion |
| 18 | elastomer |
| 52 | illuminance sensor |
| 55 | restrictor |
| 63 | adapter |

## Claims

1. A lighting apparatus having a light source and an illuminance sensor that detects an illuminance on a lighted surface which is lighted by the light source, comprising:
an illuminance detection range changing unit that changes an illuminance detection range of the illuminance sensor in the lighted area which is lighted by the light source on the lighted surface.

2. The lighting apparatus according to Claim 1,
wherein the illuminance sensor is fixed to a main body of the lighting apparatus that comprises the illuminance sensor, and
the illuminance detection range changing unit rotates the main body of the lighting apparatus to change the illuminance detection range.

3. The lighting apparatus according to Claim 1,
wherein the illuminance detection range changing unit moves the illuminance sensor relatively to a main body of the lighting apparatus that comprises the illuminance sensor, to change the illuminance detection range.

4. The lighting apparatus according to Claim 2,
wherein the illuminance sensor is inclined from a rotation axis about which the main body of the lighting apparatus is rotated.

5. The lighting apparatus according to any one of Claims 1 to 4, further comprising:
a restrictor that restricts a light-acceptance angle of the illuminance sensor.

6. The lighting apparatus according to Claim 5,
wherein the restrictor restricts the light-acceptance angle to be within ± 20 degree to a center.
